# EUROPÄISCHE PATENTANMELDUNG

(11) **EP 1 309 070 A2**
(43) Veröffentlichungstag der Anmeldung: **07.05.2003**
(21) Anmeldenummer: 02022608.0
(22) Anmeldetag: 09.10.2002
(51) Int. Cl.: H02K 5/128

(54) **Nassläuferpumpe mit Schutzeinrichtung gegen Korrosion**

(30) Priorität: 24.10.2001 DE 10152497
(71) Anmelder: Pierburg GmbH, 41460 Neuss (DE)
(72) Erfinder: Knoll, Andreas, 44267 Dortmund (DE)
(74) Vertreter: von Kirschbaum, Alexander, Dipl.-Ing.

(57) **Zusammenfassung**

Eine Nassläuferpumpe, die insbesondere zur Kühlmittelförderung in Kraftfahrzeug-Motoren einsetzbar ist, weist ein Pumpenrad (10) zum Fördern eines Fluids und einen mit dem Pumpenrad (10) verbundenen Motorläufer (22, 24) auf. Der Motorläufer ist bei Nassläuferpumpen durch das zu fördernde Fluid gekühlt. Zum Schutz vor Korrosion ist der Motorläufer (22, 24) erfindungsgemäß von einer Schutzeinrichtung umgeben, die einen ringförmigen Hohlraum (20) aufweist. In dem Hohlraum (20) ist der Motorläufer (22, 24) aufgenommen.

## Beschreibung

Die Erfindung betrifft eine Nassläuferpumpe, d.h. eine Pumpen-Motor-Einheit, die beispielsweise aus einer Kreiselpumpe und einem elektrischen Gleichstrommotor besteht. Derartige Nassläuferpumpen sind insbesondere zur Kühlmittelförderung in Kraftfahrzeug-Motoren geeignet.

Aus DE 195 45 561 ist eine Nassläuferpumpe mit einem Pumpenrad bekannt, das ein flüssiges oder gasförmiges Fluid durch einen Ansaugkanal ansaugt und in Richtung eines Abgabekanals fördert. Das Pumpenrad ist auf einer Welle befestigt. Auf derselben Welle ist ein Motorläufer eines Motors befestigt. Zur Kühlung des Motors und ggf. vorgesehener elektronischer Bauteile wird das Fluid verwendet, das den Motorläufer umströmt. Zur Förderung elektrisch leitfähiger Flüssigkeiten ist der Motorläufer mit einem Spalttopf umgeben. Das Ständerpaket des Motors mit den Wicklungen ist außerhalb des Spalttopfs, der vorzugsweise aus Kunststoff besteht, angeordnet. Durch den Spalttopf, durch den zwischen dem Motorläufer und der Topfinnenseite ein Spalt ausgebildet ist, in dem Fluid strömen kann, ist ein Abdichten des Motorläufers gegenüber der Umgebung gewährleistet. Nassläuferpumpen, die zur Förderung von elektrisch nicht leitfähigen Flüssigkeiten, wie beispielsweise Benzin, eingesetzt werden, weisen i. A. keinen Spalttopf auf, da ein Abdichten gegenüber dem Ständerpaket und den Wicklungen nicht erforderlich ist.

Motorläufer, die im Allgemeinen aus mehreren Magneten und einem Rotorkörper, d.h. einem Trägerkörper für die Magneten, bestehen, die durch ein Fluid gekühlt werden, müssen vor Korrosion geschützt werden. Dies ist insbesondere beim Fördern von Wasser oder Kühlmittel notwendig, da es sich hierbei um stark korrosive Medien handelt. Hierzu ist es bekannt, den auf der gemeinsamen Welle aufgepressten Motorläufer mit einer Edelstahlhülse als Schutzeinrichtung zu umgeben. Hierzu wird eine zylindrische Edelstahlhülse über den Motorläufer geschoben und mit zwei Edelstahlkappen verschlossen. Die Edelstahlhülse und die Kappen sowie die Kappen und die Welle werden miteinander verschweißt. Hierdurch ist der Motorläufer abgedichtet. Diese Art des Abdichtens ist insbesondere bei Großserien äußerst aufwändig.

Aufgabe der Erfindung ist es, bei Nassläuferpumpen den Motorläufer auf einfache Weise vor Korrosion zu schützen.

Die Lösung der Aufgabe erfolgt erfindungsgemäß durch die Merkmale des Anspruchs 1.

Die erfindungsgemäße Nassläuferpumpe weist ein Pumpenrad zum Fördern eines Fluids sowie einen mit dem Pumpenrad verbundenen Motorläufer auf, wobei der Motorläufer durch das Fluid gekühlt wird. Bei dem Motorläufer handelt es sich um mehrere Magnete, die ggf. von einem Rotorkörper, d.h. einem Trägerkörper, getragen werden. Erfindungsgemäß weist eine den Motorläufer umgebende gegenüber dem Fluid abdichtende Schutzeinrichtung einen ringförmigen Hohlraum zur Aufnahme des Motorläufers auf. Der ringförmige Hohlraum kann beispielsweise durch Umgießen oder Umspritzen des Motorläufers mit Kunststoff hergestellt werden. Vorzugsweise handelt es sich bei der Schutzeinrichtung um eine topfartige Einrichtung, die insbesondere vorgefertigt werden kann. In die topfartige Einrichtung, die bei einem kreisringförmigen Motorläufer vorzugsweise aus zwei konzentrischen Zylindern besteht, kann der Motorläufer eingeschoben bzw. eingesteckt werden. Der ringförmige Hohlraum zur Aufnahme des Motorläufers ist hierbei zwischen den beiden Zylindern ausgebildet. Die beiden kreisringförmigen Zylinder sind vorzugsweise zur Ausbildung einer topfartigen Schutzeinrichtung auf einer Seite durch eine Scheibe oder einen Deckel verschlossen. Die gegenüberliegende Seite der topfartigen Schutzeinrichtung wird nach dem Einstecken des Motorläufers ebenfalls abdichtend verschlossen. Durch die einen ringförmigen Hohlraum ausbildende Schutzeinrichtung ist auf einfacher Weise eine insbesondere als vorgefertigtes Kunststoff-Spritzgussteil ausbildbare Schutzeinrichtung geschaffen durch die die Korrosion insbesondere der Magnete auf einfache Weise verhindert ist.

Vorzugsweise weist die Schutzeinrichtung eine Durchgangsbohrung auf, die von dem ringförmigen Hohlraum umgeben ist. Von der Bohrung kann dann eine Lagerwelle, die den Motorläufer zusammen mit der Schutzeinrichtung trägt, aufgenommen werden. Vorzugsweise ist das Pumpenrad von der Lagerwelle getragen. Z.B. durch Aufpressen der Schutzeinrichtung auf die Lagerwelle kann ein von dem Motorläufer hervorgerufenes Drehmoment auf die Lagerwelle und von dieser auf das Pumpenrad übertragen werden. Bei einer bevorzugten Ausführungsform ist die Schutzeinrichtung formschlüssig mit dem Pumpenrad verbunden, so dass ein Aufpressen der Schutzeinrichtung auf die Lagerwelle entfallen kann. Hierzu weist die Schutzeinrichtung vorzugsweise eine in Längsrichtung der Lagerwelle verlaufende Verzahnung auf, in die eine am Pumpenrad oder einem zylindrischen Ansatz des Pumpenrades vorgesehene Verzahnung eingreift. Es ist somit möglich, den Motorläufer auf die Lagerwelle zusammen mit dem Pumpenrad aufzustecken. Ein Verpressen der Schutzeinrichtung und/ oder des Pumpenrades auf der Lagerwelle ist sodann nicht mehr erforderlich, da die Kraftübertragung im Wesentlichen über die formschlüssige Verbindung erfolgt.

Bei einer weiteren bevorzugten Ausführungsform ist das Pumpenrad und die Schutzeinrichtung einstückig ausgebildet. Insbesondere kann es sich hierbei um ein Kunststoffspritzgussteil handeln. Trotz der hierdurch erforderlichen aufwendigeren Gussform weist das einstückige Ausbilden der Schutzeinrichtung und des Pumpenrades den Vorteil auf, dass die Nassläuferpumpe leichter und schneller montierbar ist. Ferner sind Probleme an der Kraftübertragungsstelle zwischen Schutzeinrichtung und Pumpenrad vermieden.

Nachfolgend wird die Erfindung anhand bevorzugter Ausführungsformen unter Bezugnahme auf die anliegenden Zeichnungen näher erläutert. Es zeigen:
- Fig. 1: eine schematische Seitenansicht einer ersten Ausführungsform der erfindungsgemäßen Nassläuferpumpe und
- Fig. 2: eine schematische Seitenansicht einer zweiten bevorzugten Ausführungsform der erfindungsgemäßen Nassläuferpumpe.

In den dargestellten Ausführungsbeispielen sind die Pumpengehäuse sowie die Ansaug- und Abgabekanäle der Pumpe zur Verdeutlichung der Erfindung nicht dargestellt. Die Gehäuse tragen den ebenfalls nicht dargestellten Stator des die Pumpe antreibenden Motors. Ferner kann die Pumpe als Nassläuferpumpe mit oder ohne Spalttopf ausgebildet sein, wobei das Vorsehen eines Spalttopfes von der zu fördernden Flüssigkeit abhängt.

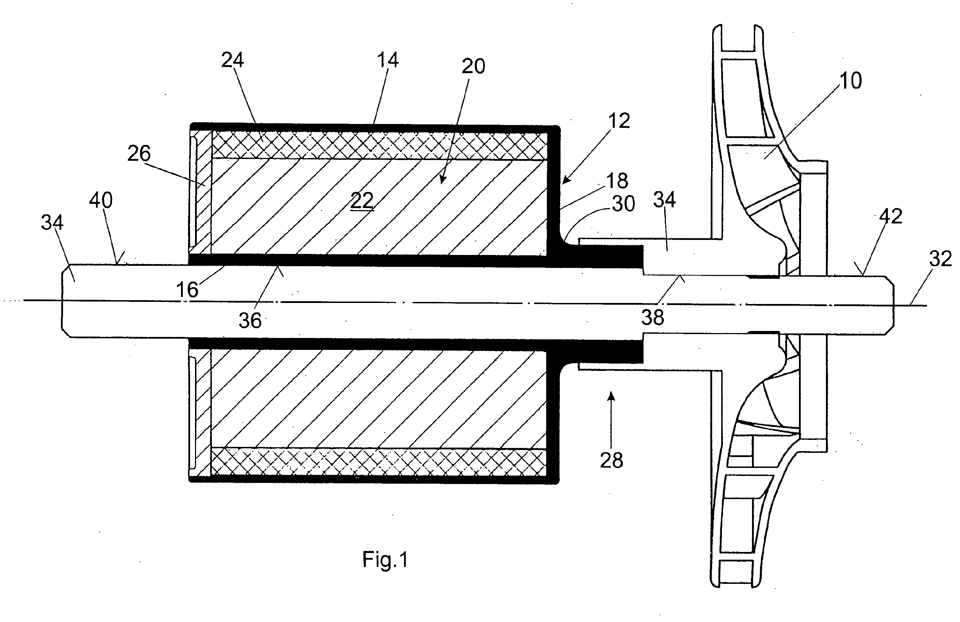

Ein Pumpenrad 10, das beispielsweise aus Kunststoff hergestellt ist, wird in Fig. 1 beispielsweise von rechts angeströmt und fördert das Fluid beispielsweise senkrecht zur Anströmrichtung.

Eine Schutzeinrichtung 12 ist in den dargestellten Ausführungsbeispielen becheroder topfartig ausgebildet und weist einen äußeren Kreiszylinder 14 und einen konzentrisch zu diesem angeordneten Kreiszylinder 16 auf. Ferner weist die Schutzeinrichtung 12 einen scheibenförmigen Boden 18 auf, der mit den beiden Zylindern 14, 16 verbunden ist. Zwischen den beiden Zylindern 14, 16 ist ein kreisringförmiger Hohlraum 20 ausgebildet, in dem ein Motorläufer angeordnet ist, der einen Rotorkörper 22 aufweist, der als Träger von Magneten 24 dient.

Zur Montage der Pumpe wird der Motorläufer 22, 24 in den Hohlraum 20 der topfartigen Schutzeinrichtung 12 gesteckt. Um den Motorläufer 22, 24 vollständig gegenüber dem den Motorläufer 22, 24 zur Kühlung umströmenden Fluid abzudichten, ist der Hohlraum 20 mit einer ringförmigen Scheibe bzw. einem Deckel 26 verschlossen. Dieser Deckel 26 kann in den Hohlraum 20 eingepresst oder eingeklebt werden. Ferner ist es möglich, den Hohlraum durch Verschweißen, z.B. Laserschweißen, des Deckels 26 dicht zu verschließen. Das Verschließen des Hohlraums 20 ist ferner durch ein Zweikomponenten-Spritzen möglich.

Da die Schutzeinrichtung 12 und die Scheibe 26 vorzugsweise aus Kunststoff hergestellt sind, ist zum Abdichten des Hohlraums 20 auch ein Verschweißen der Scheibe 26 mit der Schutzeinrichtung 12 möglich. Alternativ hierzu ist es möglich, die Scheibe oder den Deckel 26 mit Hilfe eines Zweikomponentenspritzverfahrens mit der Schutzeinrichtung 12 zu verspritzen und hierdurch den Hohlraum 20 abzudichten.

Zur Verbindung des Motorläufers 22, 24 zusammen mit der Schutzeinrichtung 12 mit dem Pumpenrad 10 ist eine Verzahnung 28 vorgesehen. Hierzu weist die Schutzeinrichtung 12 zur Ausbildung einer formschlüssigen Verbindung einen Ansatz 30 mit in Längsrichtung 32 verlaufenden Zähnen bzw. Nuten auf. Das Pumpenrad 10 weist ebenfalls einen zylindrischen Ansatz 34 auf, der eine komplementär zu der Verzahnung des Ansatzes 30 ausgebildete Verzahnung hat, so dass das Pumpenrad 10 bzw. der Ansatz 34 des Pumpenrades 10 auf den Ansatz 30 der Schutzeinrichtung 12 aufsteckbar ist. Hierdurch ist eine formschlüssige Verbindung des Pumpenrades 10 mit der Schutzeinrichtung 12 bzw. dem Motorläufer 22, 24 realisiert.

Die Schutzeinrichtung 12 und damit auch der in dem Hohlraum 20 angeordnete Motorläufer 22, 24 sowie das Pumpenrad 10 sind von einer Lagerwelle 34 getragen. Die Lagerwelle 34 erstreckt sich durch eine vom Hohlraum 20 umgebene Durchgangsbohrung 36 der Schutzeinrichtung 12. Die Durchgangsbohrung 36 ist hierbei koaxial zu den beiden den Hohlraum 20 bildenden Zylindern 14, 16. Ebenso weist das Pumpenrad 10 sowie der Ansatz 34 des Pumpenrades 10 eine Durchgangsbohrung 38 auf, durch die sich ebenfalls die Lagerwelle 34 erstreckt. Die Lagerwelle 34 weist Lagerflächen 40, 42 auf, die im Bereich der beiden Enden der Lagerwelle 34 angeordnet sind. Über die Lagerflächen 40, 42 ist die Lagerwelle 34 beispielsweise über Gleitlager in dem Pumpengehäuse gelagert.

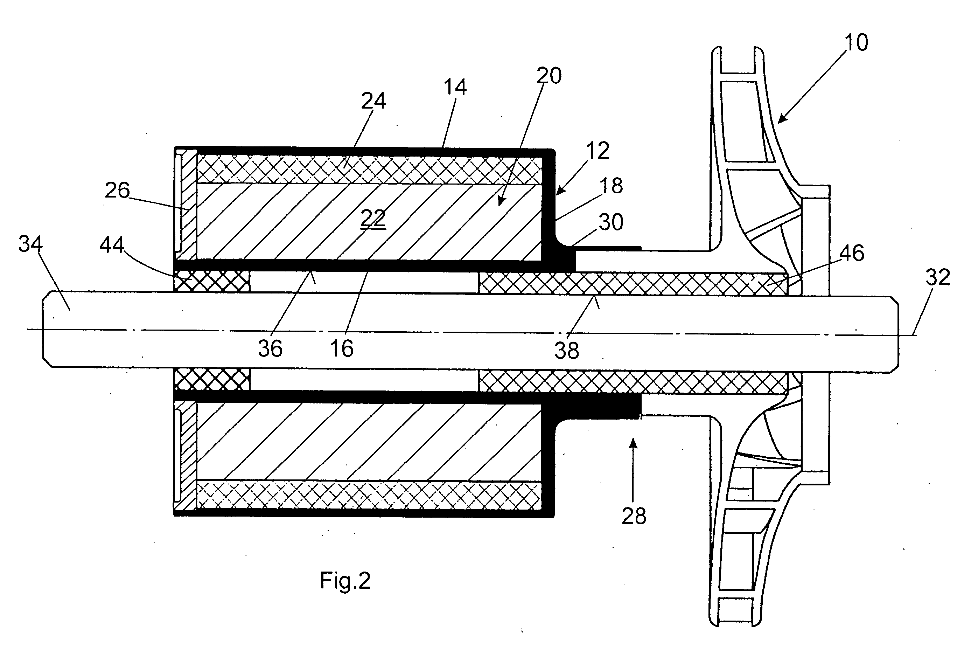

Bei der in Figur 2 dargestellten zweiten Ausführungsform der Erfindung sind dieselben oder ähnliche Bauteile mit denselben Bezugszeichen bezeichnet.

Der wesentliche Unterschied der zweiten Ausführungsform gegenüber der ersten Ausführungsform der Erfindung besteht darin, dass die Lagerwelle 34 fest im Pumpengehäuse angeordnet ist. Die Lagerwelle 34 dreht sich somit nicht. Zwischen der Durchgangsbohrung 36 der Schutzeinrichtung 12 sowie der Durchgangsbohrung 38 des Pumpenrades 10 sind z.B. zwei Gleitlager 44, 46 angeordnet. Die Schutzeinrichtung 12 dreht sich somit zusammen mit dem Motorläufer 22, 24 und dem über die Verzahnung 28 mit der Schutzeinrichtung 12 verbundenen Pumpenrad um die feststehende Lagerwelle 34.

## Patentansprüche

1. Nassläuferpumpe, insbesondere zur Kühlmittelförderung in Kraftfahrzeug-Motoren, mit
einem Pumpenrad (10) zur Förderung eines Fluids,
einem mit dem Pumpenrad (10) verbundenen Motorläufer (22, 24), wobei der Motorläufer (22, 24) durch das Fluid gekühlt wird und
einer den Motorläufer (22, 24) umgebenden gegenüber dem Fluid abdichtenden Schutzeinrichtung (12)
**dadurch gekennzeichnet,**
**dass** die Schutzeinrichtung (12) einen ringförmigen Hohlraum (20) zur Aufnahme des Motorläufers (22, 24) aufweist.

2. Nassläuferpumpe, **dadurch gekennzeichnet, dass** die Schutzeinrichtung (12) zur Ausbildung des Hohlraums (20) zwei konzentrische Zylinder (14, 16) aufweist.

3. Nassläuferpumpe nach Anspruch 1 oder 2, **dadurch gekennzeichnet, dass** die Schutzeinrichtung (12) eine Durchgangsbohrung (36) zur Aufnahme einer Lagerwelle (34) aufweist.

4. Nassläuferpumpe nach einem der Ansprüche 1 - 3, **dadurch gekennzeichnet, dass** der Hohlraum (20) mit einer ringförmigen Scheibe (26) verschlossen ist.

5. Nassläuferpumpe nach einem der Ansprüche 1 - 4, **dadurch gekennzeichnet, dass** die Schutzeinrichtung (12) vorgefertigt, insbesondere ein vorgefertigtes Kunststoff-Spritzgussteil ist.

6. Nassläuferpumpe nach einem der Ansprüche 1 - 5, **dadurch gekennzeichnet, dass** die Schutzeinrichtung (12) formschlüssig mit dem Pumpenrad (10) verbindbar ist.

7. Nassläuferpumpe nach Anspruch 6, **dadurch gekennzeichnet, dass** die Verbindung über eine insbesondere in Längsrichtung (32) der Lagerwelle (34) verlaufende Verzahnung (28) erfolgt.

8. Nassläuferpumpe nach einem der Ansprüche 1 - 5, **dadurch gekennzeichnet, dass** die Schutzeinrichtung (12) und das Pumpenrad (10) einstückig, insbesondere als Kunststoff-Spritzgussteil ausgebildet sind.
